# EUROPÄISCHE PATENTSCHRIFT

(11) **EP 2 429 360 B1**
(45) Veröffentlichungstag und Bekanntmachung des Hinweises auf die Patenterteilung: **19.03.2014**
(21) Anmeldenummer: 10717113.4
(22) Anmeldetag: 26.04.2010
(51) Int. Cl.: A47J 43/07

(54) **KÜCHENGERÄT MIT WERKZEUGSCHUBLADE**
KITCHEN APPLIANCE HAVING TOOL DRAWER
APPAREIL DE CUISINE DOTÉ D'UN TIROIR À USTENSILES

(30) Priorität: 14.05.2009 DE 102009003116; 03.09.2009 DE 102009039855
(43) Veröffentlichungstag der Anmeldung: 21.03.2012
(73) Patentinhaber: BSH Bosch und Siemens Hausgeräte GmbH, 81739 München (DE)
(72) Erfinder: KRÜGER, Tobias, 80634 München (DE); PESEC, Jurij, 3301 Petrovce (SI); RUDEZ, Darko, 3230 Sentjur (SI); KOVACIC, Peter, 3303 Gomilsko (SI)
(86) Internationale Anmeldenummer: PCT/EP2010/055509
(87) Internationale Veröffentlichungsnummer: WO 2010/130555

(56) Entgegenhaltungen:
- WO-A1-01/97667
- DE-T2- 60 008 405

## Beschreibung

### Hintergrund der Erfindung

Die vorliegende Erfindung betrifft ein Küchengerät mit einer Werkzeugschublade und einer Antriebseinheit.

### Stand der Technik

Üblicherweise werden Schubladen bei Küchengeräten mit einem elastischen Element gesichert. In der Einbaulage wird die Schublade mit Hilfe des elastischen Elements in Position gehalten, so dass diese nicht ohne Anwendung einer bestimmten Kraft geöffnet werden kann. Auch sollte beispielsweise im Falle eines Transports des Küchengeräts sichergestellt werden, dass die Schublade nicht versehentlich aufgeht. Die Schubladen beinhalten üblicherweise scharfe Werkzeuge wie Zerkleinerungsmesser, Reib-Raspeleinsätze etc. Diese sollten bei einem unkontrollierten Aufgehen der Schublade nicht zu einer Verletzung eines Benutzers führen.

Auch bekannt ist, dass Zubehörteile des Küchengeräts in einem Gehäuse untergebracht werden können, welches von einem Deckel verschlossen ist. Der Deckel wird mit Hilfe von Scharnieren an das Gehäuse angebracht, so dass ein Benutzer Zugang zu den Zubehörteilen haben kann. Solch eine Vorrichtung wird in der US 4 733 827 offenbart. Die DE 600 08 405 T2 zeigt einen Halter zum Aufbewahren von Zubehörteilen eines Haushaltsgeräts. Der Halter ist ebenfalls als Schublade in einem Boden des Geräts ausgebildet. Die WO 0197667 A1 zeigt ein weiteres Küchengerät.

Die bekannten Lösungen bringen jedoch unterschiedliche Nachteile mit sich. So kann sich beispielsweise das elastische Element schnell abnutzen und somit wird eine sichere Einbaulage der Schublade nicht mehr gewährleistet. Der Einsatz von Scharnieren hat sich als kostenintensiv herausgestellt und die Produktion erfordert eine Vielzahl an zusätzlichen Produktionsschritten.

### Der Erfindung zugrundeliegende Aufgabe

Der Erfindung liegt die Aufgabe zugrunde, ein Küchengerät mit einer Werkzeugschublade bereitzustellen, welche den Innenraum innerhalb des Gehäuses des Küchengeräts optimal verwendet. Darüber hinaus soll die Werkzeugschublade sicher in ihrer geschlossenen Position gehalten werden, einfach bedienbar und ferner kostengünstig in der Herstellung sein.

### Erfindungsgemäße Lösung

Die Lösung der gestellten Aufgabe gelingt durch ein Küchengerät mit den Merkmalen des Anspruchs 1. Vorteilhafte Aus- und Weiterbildungen, welche einzeln oder in Kombination miteinander eingesetzt werden können, sind Gegenstand der abhängigen Ansprüche.

Das erfindungsgemäße Küchengerät baut auf gattungsgemäßen Küchengeräten dadurch auf, dass die Werkzeugschublade des Küchengeräts einen Aufnahmebereich und/oder eine Ausnehmung aufweist, welcher in der eingeschobenen Position der Werkzeugschublade die Antriebseinheit wenigstens abschnittsweise umgibt. So wird der Innenraum innerhalb des Gehäuses des Küchengeräts optimal verwendet. Durch den erfindungsgemäß ausgebildeten Aufnahmebereich ist nämlich gewährleistet, dass der gewöhnlich begrenzte Platz und Raum innerhalb eines Gehäuses effektiv ausgenutzt werden kann. So wird die Antriebseinheit vorteilhaft wenigstens abschnittsweise so vom Aufnahmebereich umgeben dass darauf Werkzeuge des Küchengeräts bis in Gehäusenischen hinein platzsparend aufbewahrt werden können. Der Aufnahmebereich kann dabei so an der Außenform der Antriebseinheit angepasst sein, dass die Werkzeugschublade soweit äußerlich sichtbar unverändert bleiben kann.

### Bevorzugte Ausgestaltung der Erfindung

Der Aufnahmebereich und/oder die Ausnehmung weist bedingt durch die die Außenkontur der Antriebseinheit umgebende Form Randbereiche auf, welche erfindungsgemäß bevorzugt wenigstens abschnittsweise korrespondierend zur Außenkontur der Antriebseinheit ausgebildet sind.

Zweckdienlicher Weise ist der Aufnahmebereich und/oder die Ausnehmung insbesondere speziell im hinteren Bereich der Werkzeugschublade ausgebildet, nämlich in dem Bereich, der zuerst in das Gehäuse des Küchengeräts einführbar ist.

Gemäß einer weiteren Ausführungsform der Werkzeugschublade ist der Aufnahmebereich und/oder die Ausnehmung wenigstens abschnittsweise bogenförmig ausgebildet. Dies hat den Vorteil, dass eine im Wesentlichen kreisrundförmige Antriebseinheit platzeffizient von der Schublade umgeben werden kann.

Die Werkzeugschublade weist vorzugsweise eine rechteckförmige Grundfläche auf, an welche sich der Aufnahmebereich im Wesentlichen in Einschubrichtung an die Grundfläche anschließt.

Soweit erforderlich kann sich am bogenförmig ausgebildeten Randbereich übergangslos die in der Grundfläche ausgebildete Ausnehmung zur teilweisen Aufnahme der Antriebseinheit anschließen, was die Kompaktheit eines Küchengerätes weiter erhöht.

Erfindungsgemäß bevorzugt weist die Schublade entlang der Einschubrichtung E einen linken und rechten Flächenabschnitt auf, an welchen sich der Aufnahmebereich lediglich auf einer Seitenhälfte anschließt.

Soweit der Antriebseinheit ein Bedienknopf zugeordnet ist, ist bevorzugt, dass der Aufnahmebereich auf der dem Bedienknopf gegenüberliegenden Seite der Antriebseinheit ausgebildet ist.

Die Werkzeugschublade weist einen Abstand zur Antriebseinheit im Aufnahmebereich, so dass beispielsweise keine Vibrationen übertragen werden können. Es ist auch denkbar, dass der Abstand mittels einer Dichtlippe oder desgleichen realisiert werden kann.

Ferner weist die Werkzeugschublade ein Mittel zum Aufnehmen einer Blende auf, derart dass die Blende austauschbar ist. Somit kann Funktionalität und Design in einer Vorrichtung zusammengefasst werden. Es ist somit denkbar, dass beispielsweise ein Korpus der Werkzeugschublade über mehrere Gerätegenerationen unverändert bleibt, und nur die Blende ausgetauscht oder mit anderen Materialien hergestellt werden kann. Dies verschafft eine große Flexibilität bei der Ausbildung des äußeren Anblicks des Küchengeräts und ferner ein bedeutender Herstellungsvorteil, da nur die Blende ggf. ausgetauscht werden muss.

Bevorzugt umfasst der Aufnahmebereich in der Einbaulage einen länglichen Bereich entlang der Antriebseinheit, in welchem zumindest ein Werkzeug einlegbar ist. Somit kann die gesamte Fläche der Werkzeugschublade zum Aufbewahren unterschiedlicher Werkzeuge verwendet werden.

Vorzugsweise ist die Werkzeugschublade eingerichtet, um eine Vielzahl an Werkzeugen in Aussparungen aufzunehmen, derart dass die Werkzeuge stapelbar und/oder in verschiedenen Ebenen aufnehmbar sind. Demgemäß kann die Raum innerhalb des Gehäuses des Küchengeräts noch besser ausgenutzt werden.

Vorteilhaft weisen die Aussparungen Sicherungsmittel für die Werkzeuge des Küchengeräts auf. Der Einsatz von Sicherungsmitteln erhöht die Sicherheit des Küchengeräts, da diese beispielsweise im Transportfall oder wenn die Schublade aus dem Gehäuse entfernt worden ist, stets in der jeweiligen Aussparung fixiert sind und ein Benutzer kann nicht durch herumfliegendes oder heraus fallendes Werkzeug verletzt werden. Die Sicherungsmittel müssen jedoch derart ausgebildet sein, dass die Werkzeuge leicht abgenommen werden können, falls diese für den Betrieb des Küchengeräts gewünscht sind.

Besonders bevorzugt ist die Blende aus Kunststoff gefertigt. Eine Kunststoffblende ist leicht in der Handhabung und kann leicht gereinigt werden.

Besonders bevorzugt ist die Werkzeugschublade derart eingerichtet, um vollständig aus dem Gehäuse des Küchengeräts entfernt werden zu können. Dies erleichtert die Reinigung der Werkzeugschublade ebenfalls.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen schematisch:
- Fig. 1: ein Küchengerät mit eine Werkzeugschublade in geöffneter Stellung ohne Abdeckung gemäß der vorliegenden Erfindung;
- Fig. 2: das Küchengerät gemäß der vorliegenden Erfindung mit aufgesetzter Abdeckung in einer schematischen Ansicht
- Fig. 3: eine weitere Ansicht des Küchengeräts;
- Fig. 4: einen Schnitt durch die Achse A-A' gemäß Fig. 1; und
- Fig. 5: die Schublade aus Fig. 1 in der Draufsicht mit eingesetzten Werkzeugen.

### Ausführliche Beschreibung anhand eines Ausführungsbeispiels

Bei der nachfolgenden Beschreibung der vorliegenden Erfindung bezeichnen gleiche Bezugszeichen gleiche oder vergleichbare Komponenten.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

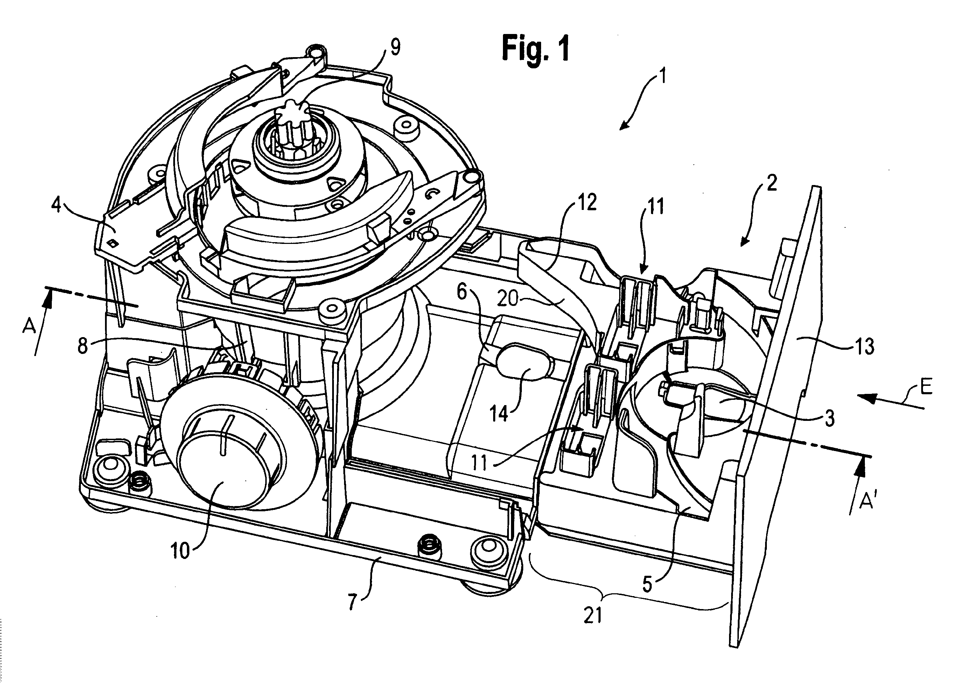

Fig. 1 zeigt ein Küchengerät 1 mit einer Werkzeugschublade 2 aus Gründen der Übersichtlichkeit ohne Abdeckgehäuse bzw. Abdeckung. Zum ordnungsgemäßen Betrieb des Küchengeräts 1 muss eine Abdeckung vorgesehen werden, welche alle Funktionsteile, wie Elektromotor und Antreibseinrichtungen abdeckt. Das Küchengerät wird mit Hilfe des Bedienknopfes 10 gesteuert, welcher beispielsweise als Drehknopf realisierbar ist. Mit Hilfe des Bedienknopfes kann ein Benutzer die gewünschte Geschwindigkeit der rotierenden Werkzeuge 30 einstellen und auch das Ein- bzw. Ausschalten des Küchengeräts 1 bewirken. Im zusammengebauten Zustand kann die Antriebseinrichtung 9 mit Hilfe einer Kupplung mit einem Werkzeug 30 des Küchengeräts 1 in Verbindung gebracht werden, so dass beispielsweise Lebensmittel in einer Schüssel der Küchengeräts 1 bearbeitet werden können. Weiter umfasst das Küchengerät 1 eine Sicherheitseinrichtung 4 auf, welche erkennt ob das Küchengerät ordnungsgemäß in Betrieb genommen werden kann, d.h. ob alle Aufsätze richtig zusammengeführt worden sind.

Die Funktionsteile des Küchengeräts 1 werden oberhalb des Gehäuseteils 7 des Küchengeräts 1 angeordnet und werden anschließend mit Hilfe einer Abdeckung abgedeckt, um Verschmutzung oder Verletzungen eines Benutzers zu vermeiden. Gemäß einer Ausführungsform sind das Gehäuseteil 7 und die Abdeckung als separate Bauteile hergestellt, jedoch auch eine Integralausführung beider Bauteile in einem Prozessschritt ist realisierbar. Das Gehäuseteil 7, Abdeckung und die Schublade 2 können aus einem plastischen Material mit Hilfe eines Spritzgussverfahrens realisiert werden, welches sich als kostengünstig und robust herausgestellt hat. Die Werkzeugschublade 2 muss derart hergestellt werden, dass diese einerseits alle Werkzeuge 30 zum Betreiben der Küchengeräts 1 aufnehmen kann und andererseits den begrenzten Platz oberhalb des Gehäuseteils 7 des Küchengeräts 1 ausnutzen kann.

Die Werkzeugschublade 2 weist unterschiedliche Aussparungen 11 zum Aufnehmen von Werkzeugen 30 des Küchengeräts. Innerhalb der Schublade 2 können unterschiedliche Werkzeuge 30 angeordnet werden, wie beispielsweise eine Antriebswelle, Schneidemesser, welche rotierend in einer Schüssel im Betrieb anbringbar sind oder andere Werkzeuge 30 zur Verarbeitung von Lebensmitteln durch das Küchengerät 1. Die Werkzeuge 30 können vertikal oder horizontal in der Ebene des Bodens 5 der Werkzeugschublade 2 angebracht werden.

Gemäß dieser Ausführungsform weist die Werkzeugschublade 2 im Bereich des Elektromotors 8 einen bogenförmigen Bereich 12, welcher in der Einbaulage der Werkzeugschublade 2 den Elektromotor 8 umschließt. Durch diese Maßnahme kann effektiv der gesamte Innenraum des Küchengeräts 1 ausgenutzt werden.

Das Küchengerät dieser beispielhaften Ausführungsform ist würfelförmig realisiert, jedoch auch andere Formen sind realisierbar, wobei die Werkzeugschublade 2 an die neuen Gegebenheiten des Innenraums des Küchengeräts angepasst werden muss. Auch vorstellbar ist, dass die Werkzeugschublade 2 standardisierte Dimensionen aufweist, so dass sie in unterschiedlichen Küchengeräten 1 oder Küchenmaschinen Einsatz finden kann.

Die Werkzeugschublade 2 weist eine Blende 13 auf, welche entweder einstückig mit dem Boden 5 Werkzeugschublade 2 hergestellt werden kann, oder nachträglich aufgesteckt werden. Weitere Funktionsteile des Küchengeräts 1 werden aus Gründen der Übersichtlichkeit nicht näher erläutert.

Gemäß einer Ausführungsform der vorliegenden weist die Werkzeugschublade 2 des Küchengeräts 1 ein Verschlussmittel 3 zum Verschließen der Schublade 2 auf, welches im Boden 5 einstückig angeordnet ist. Das Verschlussmittel 3 kann mittels eines Spritzgussverfahrens zusammen mit dem Boden 5 der Schublade 2 hergestellt werden. Durch die Wahl eines plastischen Materials kann die nötige Elastizität des Verschlussmittels 3 gesichert werden. Ferner ist es denkbar, dass das Verschlussmittel 3 ferner zusätzliche Federmittel (nicht dargestellt) erhält, um die Elastizität und die Lebensdauer beispielsweise zu erhöhen.

Das Verschlussmittel 3 wird vorteilhaft in der Mitte des Bodens 5 der Werkzeugschublade, so dass es problemlos von einem Benutzer betätigt werden kann. Das Verschlussmittel 3 wird in der Ebene des Bodens 5 integriert, so dass der optische Eindruck ebenfalls vorteilhaft ist. Das Verschlussmittel 3 gemäß dieser Ausführungsform wird als Einrastmittel ausgebildet und steht, in der Einbaulage der Werkzeugschublade 2, mit einem Gegenmittel 6 im Eingriff. Das Verschlussmittel 3 und das Gegenmittel 6 können beispielsweise als Schnappverschlussvorrichtung 19a, 19b implementiert werden, so dass diese sich nicht versehentlich lösen können. Falls ein Benutzer das Verschlussmittel 3 betätigen möchte, muss dieser mit dem Finger einen Druck auf das Verschlussmittel 3 ausüben, welches dazuführt, dass das Einrasten zwischen Gegenmittel 6 und Verschlussmittel 3 gelöst werden kann. Durch die Elastizität des plastischen Materials der Schublade 2, in welcher das Verschlussmittel 3 integral hergestellt worden ist, kann das Verschlussmittel 3 nach oben gedrückt werden und kehrt in seiner Ausgangslage wieder zurück. Das Gegenmittel 6 ist gemäß dieser Ausführungsform der vorliegenden Erfindung im Gehäuseteil 7 des Küchengeräts 1 ausgebildet und bildet einen Einrastbereich für das Verschlussmittel 3.

Das Gehäuseteil 7 weist eine Öffnung 14 auf, welche es einem Benutzer erlaubt, das Verschlussmittel 3 auf der Werkzeugschublade 2 zu betätigen. Falls die Werkzeugschublade 2 in ihrer Einbaulage innerhalb des Küchengeräts eingeschoben worden ist, stimmt die Öffnung mit der Betätigungsfläche 15 des Verschlussmittels 3 überein, so dass der Benutzer diese Betätigungsfläche 15 erreichen kann.

Falls ein Benutzer die Schublade 2 wieder in die Einbaulage schieben möchte ist keine Betätigung des Verschlussmittels 3 notwendig. Durch die vorteilhafte Ausführung schnappt das Verschlussmittel 3 in das Gegenmittel 6 ein, welches die Schublade 2 in ihre sichere Einbaulage fixiert. Zusätzlich erhält der Benutzer eine hörbare Rückmeldung des Vorgangs, welche durch das Einrasten des Verschlussmittels 3 auf das Gegenmittel 6 erzeugt wird und erkennt, dass die Werkzeugschublade 2 in ihrer Einbaulage sicher fixiert worden ist.

Ferner ist es vorstellbar, dass das Verschlussmittel 3 am Gehäuseteil 7 des Küchengeräts 1 angeordnet ist, und analog das Gegenmittel 6 in dem Boden 5 der Werkzeugschublade 2.

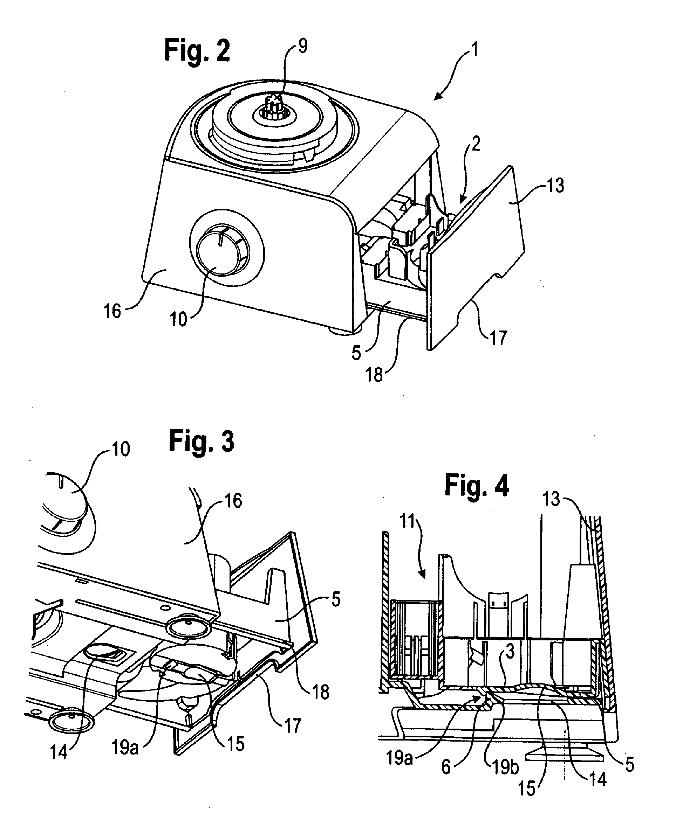

Fig. 2 zeigt das Küchengerät 1 mit der Werkzeugschublade 2, welche sich teilweise in ihrer Einbaulage befindet. Damit ein Benutzer bequem die Betätigungsfläche 15 des Verschlussmittels 3 an der Werkzeugschublade 2 erreichen kann, wurde die Blende 13 mit einem Durchgriff 17 versehen, welcher als halboffene Aussparung beispielhaft ausgeführt ist. Es ist vorstellbar andere Formen zu wählen, welche es ermöglichen, dass ein Benutzer die Betätigungsfläche 15 problemlos erreichen kann. Die Fig. 2 zeigt die Würfelform des Küchengerätes mit einer aufgesetzten Abdeckung 16 auf, welche alle Funktionsteile wie Steuerelektronik oder Elektromotor abdeckt, und vor unsachgemäßen Zugriff schützt. Der Boden 5 der Werkzeugschublade 2, weist Gleitflächen 18 auf, welche sich jeweils seitlich befinden und das sichere Ein- bzw. Ausfahren der Werkzeugschublade 2 ermöglichen. Die Gleitflächen 18 sind beispielsweise symmetrisch angeordnet und wirken mit geeigneten Mitteln am Gehäuseteil 7 zusammen.

Fig. 3 zeigt das Küchengerät 2 aus einer weiteren Ansicht, welche den Boden 5 der Werkzeugschublade 2 genauer abbildet. Das Verschlussmittel 3 ist in der Mitte des Bodens 5 der Werkzeugschublade 2 angeordnet, so dass ein Benutzer die Betätigungsfläche 15 leicht erreichen kann. Wie in der Fig. 2 beschrieben, weist die Blende 13 einen Durchgriff 17 auf, der trapezförmig ausgebildet ist, so dass die Hand bzw. die Finger der Hand eines Benutzers zur Betätigungsfläche 15 durchgriffen können.

Die Betätigungsfläche 15 stimmt mit der Öffnung 14 im Gehäuseteil 7 überein, falls die Werkzeugschublade 2 in das Küchengerät eingeschoben ist, d.h. sich in ihrer Einbaulage befindet. Wenn die Schublade 2 in ihre Endlage gebracht wird, passiert der hakenförmige Bereich des Verschlussteils 3 die Öffnung 14 und kann in der Einbaulage in dem Gegenmittel 3 am Gehäuseteil 7 einrasten, so dass eine sichere Verbindung zwischen Verschlussmittel 3 und Gegenmittel 6 sichergestellt ist. Nun kann ein Benutzer das Küchengerät transportieren, ohne dass beispielsweise schwerkraftbedingt die Schublade 2 versehentlich die Einbaulage verlässt.

Gemäß dieser beispielhaften Ausführungsform ist die Betätigungsfläche 15 des Verschlussmittels 3 so eingerichtet, dass ein einzelner Finger eines Benutzers notwendig ist, um diese zu betätigen. Vorstellbar ist die Fläche 15 so zu vergrößern, dass beispielsweise mehrere Finger einer Hand zur Betätigung notwendig sind, welche die Haptik verbessern könnte.

Fig. 4 zeigt einen Schnitt durch das Küchengerät 1 aus der Fig. 1 entlang der Achse A-A'.

Die Schublade 2 befindet sich in ihrer Einbaulage, d.h. im verschlossenen Zustand, so dass die Betätigungsfläche 15 des Verschlussmittels 3 mit der Öffnung 14 im Gehäuseteil 7 des Küchengeräts 1 übereinstimmt. Die Werkzeugschublade 2 wird komplett im Inneren des Küchengeräts 1 aufgenommen, so dass alle Werkzeuge 30, welche in den Aussparungen 11 angeordnet werden können, durch die Abdeckung 10 abgedeckt sind.

Gemäß dieser Ansicht kann das Einrasten des Verschlussmittels 3 mit dem hakenförmigen Bereich in das Gegenmittel 6 am Gehäuseteil 7 erkannt werden. Um die Schublade 2 wieder aus der Einbaulage in eine geöffneten Position zu bringen muss ein Benutzer die Betätigungsfläche 15 so betätigen, dass das Verschlussmittel 3 das Gegenmittel 6 freigibt. Gemäß dieser Ausführungsform muss die Betätigung aufwärts durchgeführt werde. Durch die Elastizität des plastischen Materials des Bodens 5 der Werkzeugschublade 2, in welchem das Verschlussmittel 3 ausgebildet ist, kann auf zusätzliche Federmitteln verzichtet werde. Jedoch falls beispielsweise die Steifigkeit des Verschlussmittels 3 erhöht werden sollte, ist es vorstellbar, dass eine Flachfeder oberhalb der Betätigungsfläche 15 oder auf der Betätigungsfläche 15 angeordnet werden kann. Durch die Flachfeder kann ein verbessertes Zusammenwirken zwischen Verschlussmittel 3 und Gegenmittel 6 gesichert werden, so dass die Schublade sicher in ihrer Einbaulage fixiert ist. Die Flachfeder kann beispielsweise auch dazu verwendet werden, um den Druck auf die Betätigungsfläche 15 anzupassen.

Gemäß dieser Ausführungsform hat das Verschlussmittel 3 eine bogenförmige Ausgestaltung, welche zusätzlich durch die Elastizität des Materials die Schublade 2 in ihrer Einbaulage unter elastischer Spannung hält, welche einer noch besseren Fixierung entspricht. Durch die oben genannte elastische Vorspannung kann beispielsweise einem Klappern der Schublade 2 im Falle eines Transports des Küchengeräts 1 entgegengewirkt werden. Dieser Effekt kann beispielsweise durch die Verwendung zusätzlicher Feder, wie oben beschrieben, verbessert werden.

In dieser Ausführungsform der Werkzeugschublade 2 ist die Materialstärke des plastikhaltigen bzw. kunststoffhaltigen Materials im Wesentlichen konstant gehalten worden. Es ist jedoch denkbar, dass das Verschlussmittel 3 eine unterschiedliche Materialstärke aufweist, um beispielsweise die Elastizität zu verändern. So könnte auf weitere Federn verzichtet werden, welches ebenfalls kostensparend ist.

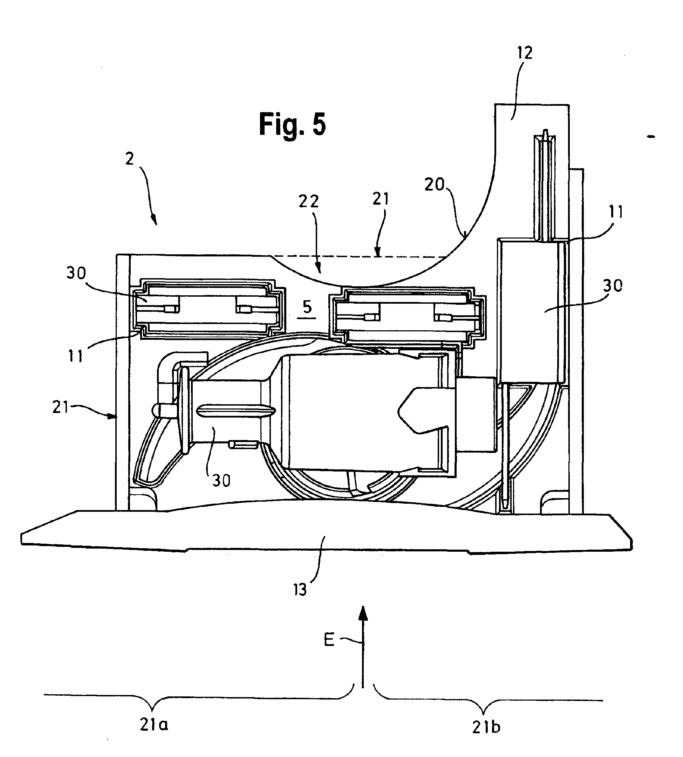

Fig. 5 zeigt schließlich die Schublade 2 aus Fig. 1 in der Draufsicht mit eingesetzten Werkzeugen 30. Deutlich erkennbar ist, wie der Aufnahmebereich 12 sich an eine vorzugsweise rechteckförmig ausgebildete Grundfläche 21 der Schublade 2 anschließt und/oder durch eine in der Grundfläche 21 ausgebildete Ausnehmung 22 gebildet ist. Insbesondere ist erkennbar, wie die Schublade 2 entlang der Einschubrichtung E einen linken 21a und rechten 21b Flächenabschnitt aufweist und der Aufnahmebereich 12 lediglich auf einem Flächenabschnitt 21 b anschließt.

Wie in Fig. 1 ersichtlich ist der Antriebseinheit 8 ein Bedienknopf 10 zugeordnet, wobei der Aufnahmebereich 12 vorzugsweise auf der dem Bedienknopf 10 gegenüberliegenden Seite der Antriebseinheit 8 ausgebildet ist, so dass das auf dem Aufnahmebereich 12 angeordnete Werkzeug 30 nicht den Bedienknopf 10 samt gewöhnlich dahinter angeordneter Steuerelektronik (nicht dargestellt) beschädigen kann.

Schließlich zeigt Fig. 5, wie am bogenförmig ausgebildeten Randbereich 20 sich übergangslos die in der Grundfläche 21 ausgebildete Ausnehmung 22 anschließt, was die Kompaktheit des Gerätes 1 vorteilhaft weiter erhöht.

Mit der vorliegenden Erfindung lassen sich erstmals ohne Eingriff in das äußere Design Werkzeuge 30 des Küchengerätes 1 unter Ausnutzung von Gehäusenischen komplett in einer kompakten Schublade 2 verstauen.

### Bezugszeichenliste

- 1: Küchengerät
- 2: Werkzeugschublade
- 3: Verschlussmittel
- 4: Sicherheitseinrichtung
- 5: Boden der Werkzeugschublade
- 6: Gegenmittel
- 7: Gehäuseteil des Küchengeräts
- 8: Elektromotor
- 9: Antriebseinrichtung
- 10: Bedienknopf
- 11: Aussparungen zum Aufnehmen von Werkzeugen
- 12: Aufnahmebereich
- 13: Blende
- 14: Öffnung
- 15: Betätigungsfläche des Verschlussmittels
- 16: Abdeckung
- 17: Durchgriff
- 18: Gleitflächen bzw. Gleitbereiche
- 19: Hacken/Gegenhacken
- 20: Randbereich des Aufnahmebereichs 12
- 21: vorzugsweise rechteckförmige Grundfläche der Werkzeugschublade 2
- 21a: linker Flächenabschnitt der Werkzeugschublade 2
- 21b: rechter Flächenabschnitt der Werkzeugschublade 2
- 22: in Grundfläche 21 ausgebildete Ausnehmung

- 30: Werkzeug

- E: Einschubrichtung der Werkzeugschublade 2

## Patentansprüche

1. Küchengerät (1) mit einer Werkzeugschublade (2) und einer Antriebseinheit (8), **dadurch gekennzeichnet, dass** die Werkzeugschublade (2) einen Aufnahmebereich (12) und/oder eine Ausnehmung (22) aufweist, welche in der eingeschobenen Position der Werkzeugschublade (2) die Antriebseinheit (8) wenigstens abschnittsweise umgibt.

2. Küchengerät (1) nach Anspruch 1, **dadurch gekennzeichnet, dass** die Randbereiche (20) des Aufnahmebereichs (12) und/oder der Ausnehmung (22) der Werkzeugschublade (2) wenigstens abschnittsweise korrespondierend zur Außenkontur der Antriebseinheit ausgebildet ist.

3. Küchengerät (1) nach Anspruch 1 oder 2, **dadurch gekennzeichnet, dass** der Aufnahmebereich (12) und/oder die Ausnehmung (22) im hinteren Bereich der Werkzeugschublade (2), welche zuerst in das Gehäuse des Küchengeräts (1) einführbar ist, ausgebildet ist.

4. Küchengerät (1) nach einem der Ansprüche 1 bis 3, **dadurch gekennzeichnet, dass** der Aufnahmebereich (12) und/oder die Ausnehmung (22) wenigstens abschnittsweise einen bogenförmig ausgebildeten Randbereich (20) aufweist.

5. Küchengerät (1) nach einem der vorherigen Ansprüche, wobei die Werkzeugschublade (2) eine vorzugsweise rechteckförmige Grundfläche (21) aufweist, **dadurch gekennzeichnet, dass** der Aufnahmebereich (12) sich im Wesentlichen in Einschubrichtung an die Grundfläche (21) anschließt.

6. Küchengerät (1) nach einem der vorherigen Ansprüche 5, **dadurch gekennzeichnet, dass** die Schublade (2) entlang der Einschubrichtung (E) einen linken (21 a) und rechten (21 b) Flächenabschnitt aufweist und der Aufnahmebereich (12) lediglich an einem Flächenabschnitt (21 b) anschließt.

7. Küchengerät (1) nach einem der vorherigen Ansprüche, wobei der Antriebseinheit (8) ein Bedienknopf (10) zugeordnet ist, **dadurch gekennzeichnet, dass** der Aufnahmebereich (12) auf der dem Bedienknopf (10) gegenüberliegenden Seite der Antriebseinheit (8) ausgebildet ist.

8. Küchengerät (1) nach einem der Ansprüche 4 bis 7, **dadurch gekennzeichnet, dass** am bogenförmig ausgebildeten Randbereich (20) sich übergangslos die in der Grundfläche (21) ausgebildete Ausnehmung (22) anschließt.

9. Küchengerät (1) nach einem der vorherigen Ansprüche, **dadurch gekennzeichnet, dass** die Werkzeugschublade (2) eine Mittel zum Aufnehmen einer Blende (13) aufweist, derart dass die Blende austauschbar ist.

10. Küchengerät (1) nach einem der vorhergehenden Ansprüche, **dadurch gekennzeichnet, dass** der Aufnahmebereich (12) einen länglichen Bereich (12) entlang der Antriebseinheit (8) in der Einbaulage aufweist, in welchem zumindest ein Werkzeug einlegbar ist.

11. Küchengerät (1) nach einem der vorhergehenden Ansprüche, **dadurch gekennzeichnet, dass** die Werkzeugschublade (2) eingerichtet ist, um eine Vielzahl an Werkzeugen (30) in Aussparungen (11) aufzunehmen, derart dass die Werkzeuge stapelbar und/oder in verschiedenen Ebenen aufnehmbar sind.

12. Küchengerät (1) nach einem der vorhergehenden Ansprüche, **dadurch gekennzeichnet, dass** die Aussparungen (11) Sicherungsmittel für die Werkzeuge des Küchengeräts (1) aufweisen.

13. Küchengerät (1) nach einem der vorhergehenden Ansprüche, **dadurch gekennzeichnet, dass** das die Werkzeugschublade (2) und/oder die Blende (13) aus Kunststoff gefertigt ist.

14. Küchengerät (1) nach einem der vorhergehenden Ansprüche, **dadurch gekennzeichnet, dass** die Werkzeugschublade (2) derart eingerichtet ist, dass diese vollständig aus einem Gehäuseteil (7) des Küchengeräts entfernbar ist.

15. Küchengerät (1) nach einem der vorhergehenden Ansprüche, **dadurch gekennzeichnet, dass** das Gehäuseteil (7) zumindest ein Teil eines Küchengerätebodens ist.

## Claims

1. Kitchen appliance (1) having a tool drawer (2) and a drive unit (8), **characterised in that** the tool drawer (2) comprises a receiving region (12) and/or a recess (22), which, at least in sections, surrounds the drive unit (8) in the inserted position of the tool drawer (2).

2. Kitchen appliance (1) according to claim 1, **characterised in that** the edge regions (20) of the receiving region (12) and/or the recess (22) of the tool drawer (2) are embodied so as to correspond to the exterior contour of the drive unit at least in sections.

3. Kitchen appliance (1) according to claim 1 or 2, **characterised in that** the receiving region (12) and/or the recess (22) is embodied in the rear region of the tool drawer (2), which can be inserted for the first time into the housing of the kitchen appliance (1).

4. Kitchen appliance (1) according to one of claims 1 to 3, **characterised in that** the receiving region (12) and/or the recess (22) comprises a curved edge region (20) at least in sections.

5. Kitchen appliance (1) according to one of the preceding claims, with the tool drawer (2) comprising a preferably rectangular base surface (21), **characterised in that** the receiving region (12) connects to the base surface (21) essentially in the insertion direction.

6. Kitchen appliance (1) according to one of the preceding claims 5, **characterised in that** the drawer (2) comprises a left (21a) and right (21b) surface section along the insertion direction (E) and the receiving region (12) only connects to a surface section (21b).

7. Kitchen appliance (1) according to one of the preceding claims, with the drive unit (8) being assigned an operating button (10), **characterised in that** the receiving region (12) is embodied on the side of the drive unit (8) facing the operating button (10).

8. Kitchen appliance (1) according to one of claims 4 to 7, **characterised in that** the recess (22) embodied in the base surface (21) connects in a transition-free fashion to the curved edge region (20).

9. Kitchen appliance (1) according to one of the preceding claims, **characterised in that** the tool drawer (2) comprises a means for receiving a panel (13) such that the panel can be replaced.

10. Kitchen appliance (1) according to one of the preceding claims, **characterised in that** the receiving region (12) comprises a longish region (12) along the drive unit (8) in the installed position, in which at least one tool can be placed.

11. Kitchen appliance (1) according to one of the preceding claims, **characterised in that** the tool drawer (2) is configured so as to accommodate a plurality of tools (30) in recesses (11) such that the tools can be stacked and/or can be accommodated in different planes.

12. Kitchen appliance (1) according to one of the preceding claims, **characterised in that** the recesses (11) comprise securing means for the tools of the kitchen appliance (1).

13. Kitchen appliance (1) according to one of the preceding claims, **characterised in that** the tool drawer (2) and/or the panel (13) is made from plastic.

14. Kitchen appliance (1) according to one of the preceding claims, **characterised in that** the tool drawer (2) is configured such that this can be removed completely from a housing part (7) of the kitchen appliance.

15. Kitchen appliance (1) according to one of the preceding claims, **characterised in that** the housing part (7) is at least part of a kitchen appliance base.

## Revendications

1. Appareil de cuisine (1) doté d'un tiroir à ustensiles (2) et d'une unité d'entraînement (8), **caractérisé en ce que** le tiroir à ustensiles (2) présente une zone de logement (12) et/ou un évidement (22) lequel, en position rentrée du tiroir à ustensiles (2), entoure l'unité d'entraînement (8) au moins par sections.

2. Appareil de cuisine (1) selon la revendication 1, **caractérisé en ce que** les zones de bord (20) de la zone de logement (12) et/ou de l'évidement (22) du tiroir à ustensiles (2) sont réalisées de manière correspondant au moins par sections au contour extérieur de l'unité d'entraînement.

3. Appareil de cuisine (1) selon la revendication 1 ou 2, **caractérisé en ce que** la zone de logement (12) et/ou l'évidement (22) sont réalisés dans la partie arrière du tiroir à ustensiles (2), lequel peut être introduit en premier dans le boîtier de l'appareil de cuisine (1).

4. Appareil de cuisine (1) selon l'une quelconque des revendications 1 à 3, **caractérisé en ce que** la zone de logement (12) et/ou l'évidement (22) présentent une zone de bord (20) réalisée en forme d'arc au moins par sections.

5. Appareil de cuisine (1) selon l'une quelconque des revendications précédentes, le tiroir à ustensiles (2) présentant une surface de base (21) de préférence rectangulaire, **caractérisé en ce que** la zone de logement (12) se raccorde à la surface de base (21) essentiellement dans le sens d'insertion.

6. Appareil de cuisine (1) selon l'une quelconque des revendications 5, **caractérisé en ce que** le tiroir (2) présente le long du sens d'insertion (E) une section plane gauche (21 a) et une section plane droite (21b) et **en ce que** la zone de logement (12) se raccordé uniquement à une section plane (21 b).

7. Appareil de cuisine (1) selon l'une quelconque des revendications précédentes, une tête de commande (10) étant attribuée à l'unité d'entraînement (8), **caractérisé en ce que** la zone de logement (12) est réalisée sur le côté de l'unité d'entraînement (8), opposé à la tête de commande (10).

8. Appareil de cuisine (1) selon l'une quelconque des revendications 4 à 7, **caractérisé en ce que** l'évidement (22) réalisé dans la surface de base (21) se raccorde sans transition sur la zone de bord (20) réalisée en forme d'arc.

9. Appareil de cuisine (1) selon l'une quelconque des revendications précédentes, **caractérisé en ce que** le tiroir à ustensiles (2) présente un moyen pour loger un bandeau (13), de manière à ce que le bandeau soit interchangeable.

10. Appareil de cuisine (1) selon l'une quelconque des revendications précédentes, **caractérisé en ce que** la zone de logement (12) présente en position de montage une zone allongée (12) le long de l'unité d'entraînement (8), dans laquelle zone allongée au moins un ustensile peut être posé.

11. Appareil de cuisine (1) selon l'une quelconque des revendications précédentes, **caractérisé en ce que** le tiroir à ustensiles (2) est aménagé pour loger une pluralité d'ustensiles (30) dans des évidements (11), de manière à ce que les ustensiles soient empilables et/ou logeables dans différents plans.

12. Appareil de cuisine (1) selon l'une quelconque des revendications précédentes, **caractérisé en ce que** les évidements (11) présentent des moyens de sécurité pour les ustensiles de l'appareil de cuisine (1).

13. Appareil de cuisine (1) selon l'une quelconque des revendications précédentes, **caractérisé en ce que** le tiroir à ustensiles (2) et/ou le bandeau (13) sont fabriqués en matière plastique.

14. Appareil de cuisine (1) selon l'une quelconque des revendications précédentes, **caractérisé en ce que** le tiroir à ustensiles (2) est aménagé de manière à ce que celui-ci puisse être complètement retiré hors d'une partie de boîtier (7) de l'appareil de cuisine.

15. Appareil de cuisine (1) selon l'une quelconque des revendications précédentes, **caractérisé en ce que** la partie de boîtier (7) est au moins une partie d'un fond d'appareil de cuisine.
